# DEMANDE DE BREVET EUROPEEN

(11) **EP 3 272 506 A1**
(43) Date de publication de la demande: **24.01.2018**
(21) Numéro de dépôt: 17181990.7
(22) Date de dépôt: 18.07.2017
(51) Int. Cl.: B29C 70/52

(54) **PROCÉDÉ D'OBTENTION D'UNE PIÈCE PROFILÉE EN MATIÈRE COMPOSITE THERMOPLASTIQUE, ET DISPOSITIF DE MISE EN UVRE DE CE PROCÉDÉ**

(30) Priorité: 18.07.2016 FR 1656845
(71) Demandeur: CQFD Composites, 68270 Wittenheim (FR)
(72) Inventeur: Chauzu, Frank, 68170 RIXHEIM (FR)
(74) Mandataire: Brungard, Yves Francois

(57) **Abrégé**

Le procédé selon l'invention comprend les étapes consistant à :
▷ imprégner par pultrusion dans une unité d'imprégnation (3) des fibres de renforts avec un mélange constitué de deux pré-polymères réactifs (composition précurseur du polymère final) au moyen d'une filière de pultrusion générique, un premier pré-polymère comportant au moins 2 fonctions réactives terminales identiques X et un deuxième pré-polymère comportant également au moins 2 fonctions réactives terminales identiques Y; Y étant capable de réagir avec X selon une réaction de condensation
▷ procéder à une montée en masse molaire desdits pré-polymères réactifs par une réaction de polycondensation dans l'unité de polymérisation (4) de la filière de pultrusion générique de manière à obtenir un polymère partiellement ou totalement polymérisée, et à former un matériau composite intermédiaire (9),
▷ maintenir et/ou amener le polymère constituant ledit matériau composite intermédiaire à une température proche et/ou égale et/ou supérieure à son point de fusion en sortie de ladite unité de polymérisation,
▷ calibrer par refroidissement dans une unité de calibrage (5) le matériau composite intermédiaire en fusion selon la forme finale spécifique du profilé souhaité.

## Description

### DOMAINE DE L'INVENTION

La présente invention concerne un procédé d'obtention d'une pièce profilée en matériau composite thermoplastique et un dispositif de mise en oeuvre de ce procédé. Elle concerne en particulier l'utilisation d'une résine thermoplastique réactive particulière pour former la matrice de la matière composite. Elle trouve une application en particulier dans un procédé de pultrusion

### ART ANTÉRIEUR

Pour la fabrication de profilés en matériaux composites, la technique connue de pultrusion est largement utilisée. Elle permet en effet d'obtenir des profilés de sections constantes aux propriétés mécaniques élevées et de surcroit présentant un bon rapport performance/poids par rapport aux matériaux traditionnels. Il s'agit en pultrusion de tirer d'une façon continue ou semi-continue un faisceau de fibres unidirectionnelles et/ou multidirectionnelles au travers d'une filière permettant d'imprégner lesdites fibres d'une résine polymérisable et de polymériser la résine dans la filière pour former un profilé composite en sortie de ladite filière. Cette technique est généralement mise en oeuvre avec des résines thermodurcissables. Le profilé est complétement formé à sa sortie de la filière. Dans le cas des résines thermodurcissable, le profilé n'est par ailleurs pas modifiable après sa sortie de la filière. Cette technique nécessite de prévoir un outillage complet pour chaque section de profilé que l'on souhaite fabriquer, depuis la zone d'imprégnation jusqu'à la sortie de la filière.

Le faisceau de fibres est typiquement un regroupement de mèches, chaque mèche étant composée d'une multitude de fibres, par exemple de fibres de verre. Une mèche est aussi appelé stratifil dans le cas du verre ou désigné par le terme anglais « roving ».

Afin d'ouvrir d'autres perspectives de conception, l'utilisation de résines thermoplastiques en pultrusion est en plein développement, de manière à permettre de transformer le profilé obtenu par thermoformage. Dans l'état de l'art, cette approche utilise généralement des polymères fondus. Il s'agit alors de faire fondre le polymère, d'imprégner les fibres et de calibrer par refroidissement, sans étape de polymérisation. Cependant, la haute viscosité des résines thermoplastiques à l'état fondu conduit à une imprégnation des fibres de qualité médiocre. Les profilés composites obtenus sont hétérogènes et les taux de fibres restent limités à environ 45-50% en volume.

Par ailleurs, pendant l'étape de pultrusion, le calibrage de ce type de composite pose des problèmes. D'une part, la viscosité de la résine génère des niveaux de pression très important à l'entrée de l'outillage de calibrage ce qui conduit à des ruptures intempestives des fibres. D'autre part, la mauvaise homogénéité du composite, avec des zones riches en résine et des zones riches en fibres, conduit à la création de chemins d'écoulement privilégiés de la résine lors du passage dans le calibreur et ne permet pas de monter en pression dans les zones riches en fibres pour en améliorer l'imprégnation. Ces problèmes sont accentués lorsqu'il s'agit d'utiliser des résines présentant des températures d'usage élevées.

Enfin, certaines résines thermoplastiques peuvent se travailler à la manière d'une résine thermodurcissable, c'est-à-dire par voie réactive. La polymérisation des monomères thermoplastiques a lieu alors in situ dans l'outillage de pultrusion. Dans ce cas, le profilé sort généralement selon la forme finale de la filière de pultrusion qui, dans son étendue comprise généralement de 700 à 1000 mm, intègre une zone d'imprégnation suivie de la zone de polymérisation ayant la forme du profilé souhaité de sorte que le profilé sort dans sa forme finale, généralement à l'état solide c'est-à-dire à une température en dessous du point de fusion de la résine qui le compose. La zone de polymérisation joue donc également le rôle de zone de calibrage.

L'avantage de cette technologie réside dans l'utilisation de précurseurs tels que des monomères de très faible viscosité, ce qui conduit à pouvoir utiliser des taux de renfort très importants tout en ayant une excellente et très homogène imprégnation des fibres. Les systèmes réactifs existant pour la pultrusion sont principalement basés sur des mécanismes de polymérisation anionique de monomères comme pour le polyamide 6, à partir d'ε-caprolactame, le polyamide 12, à partir de lauryllactame, ou des polymérisations radicalaires comme avec le PMMA, à partir de méthacrylate de méthyle. Malheureusement, ces résines présentent deux inconvénients majeurs : d'une part, les monomères utilisés sont très volatiles et peuvent difficilement être portées à hautes températures en milieu ouvert sans s'évaporer; de cette température dépend la vitesse de polymérisation, et donc la productivité du procédé; d'autre part, le taux de monomère résiduel nécessite une post-cuisson, notamment pour respecter des contraintes réglementaires.

Une autre technique connue dans la chimie des polymères est la polymérisation par polycondensation. Cette approche est largement utilisée pour les procédés de synthèse par lots dans la fabrication des polymères comme les polyamides et/ou les polyamides aromatiques avec par contre un fort dégagement de sous-produit, tel que de l'eau, à l'issue du mécanisme de polymérisation par polycondensation.

Selon le brevet EP 0261020 A1, cette technique de polymérisation est mise en oeuvre par pultrusion sur la base d'un pré-polymère mono-composant possédant à chaque extrémité de la chaine, respectivement une fonction réactive amine et une fonction réactive acide carboxylique. Cette approche ne permet pas de contrôler précisément la viscosité de la résine au moment de l'imprégnation des fibres dans la mesure où le pré-polymère, stocké fondu à chaud, est susceptible d'entrer en réaction de polymérisation, entrainant ainsi un allongement de chaines et une augmentation de la viscosité.

Enfin, une dernière technique connue dans la chimie des polyamides est la polymérisation par polyaddition. Selon le brevet WO 2014/064375A1, cette technique de polymérisation est mise en oeuvre pour la fabrication de composite sur la base d'un pré-polymère et d'un allongeur de chaine. Cette approche évite d'avoir des sous-produits dégagés et présente une relative stabilité des deux composants séparés mais présente d'autres inconvénients. D'une part, la réaction est extrêmement rapide, ce qui est difficilement compatible avec la pultrusion. D'autre part, les allongeurs de chaines sont des produits onéreux et difficiles à mettre en oeuvre par dosage (très liquide). De plus, le produit final synthétisé n'est pas un pur polyamide.

### OBJECTIFS DE L'INVENTION

Pour résoudre ces problèmes l'invention vise à fournir un procédé et une installation permettant de fabriquer des profilés par pultrusion par voie réactive thermoplastique en utilisant des composants de coût abordable et faciles à mettre en oeuvre tout en simplifiant l'outillage.

### DESCRIPTION DE L'INVENTION

Pour résoudre ces problèmes, l'invention propose donc un procédé de pultrusion réactive thermoplastique pour obtenir une pièce profilée en matériau composite thermoplastique, comprenant les étapes consistant à :
_{▷} passer des fibres de renfort à travers une unité d'imprégnation selon une direction de tirage et imprégner les dites fibres avec une résine;
▷ procéder à une polymérisation de la résine dans une unité de polymérisation en aval de l'unité d'imprégnation de manière à obtenir une matrice enrobant les fibres, partiellement ou totalement polymérisée, et à former avec les fibres un matériau composite intermédiaire;
▷ calibrer par refroidissement dans une unité de calibrage le matériau composite intermédiaire en fusion selon une section finale spécifique du profilé souhaité;
le procédé étant caractérisé en ce que :
▷ on forme la résine par un mélange de deux pré-polymères réactifs, un premier pré-polymère comportant au moins deux premières fonctions réactives terminales identiques X et un deuxième pré-polymère comportant au moins deux deuxièmes fonctions réactives terminales identiques Y; la première fonction réactive X étant capable de réagir avec la deuxième fonction réactive Y selon une réaction de condensation ;
▷ la polymérisation étant une montée en masse molaire desdits pré-polymères réactifs par une réaction de polycondensation dans l'unité de polymérisation .

Selon l'invention, les deux pré-polymères sont fondus et dosés séparément, puis mélangés entre eux pour former la résine.

Selon l'invention, chaque pré-polymère est fondu à une température comprise dans une plage de 40K à partir et au-dessus de sa température de fusion, typiquement dans une plage de 30K, et préférentiellement supérieure d'au moins 5K à la température de fusion.

Selon une technique particulière, chaque prépolymère est fourni pour former la résine à un mélangeur, à une pression supérieure à 5 bars, typiquement comprise entre 10 et 50 bars et préférentiellement entre 10 et 25 bars. Le design de ladite unité d'imprégnation permet de générer une contre pression suffisante au voisinage du mélangeur. Cette pression a un effet limitant sur l'évaporation d'eau et donc sur la cinétique de remontée en masse. Cette pression est utilisée comme paramètre de régulation des vitesses de rotation des pompes et/ou des extrudeuses.

De préférence les fonctions réactives sont introduites en quantité quasi stoechiométrique dans la composition précurseur.

Selon l'invention, la première fonction réactive est choisie dans un groupe comprenant *OH* et *NH₂,* et la deuxième une fonction réactive est choisie dans le groupe comprenant *COOH* et *COCl.* Selon l'invention, la structure des pré-polymères est choisie dans un groupe comprenant des structures aliphatiques, semi-cyclo aliphatiques et semi-aromatiques, les pré-polymères étant des thermoplastiques choisis dans un groupe comprenant les polyamides, les polyesters et leurs copolymères.

De préférence, les pré-polymères sont des polyamides.

Selon l'invention, les monomères des pré-polymères sont choisis dans un groupe comprenant les polyamines, les polyols, les polyacides, les anhydrides, les polychlorures d'acide, les hydroxyacides et les aminoacides, et préférentiellement dans un groupe comprenant les diamines, les diols, les diacides et les dichlorures d'acide.

### EXEMPLES SYNTHÈSES DE PRE-POLYMÈRES.

A titre d'exemple on pourra synthétiser les deux pré-polymères de la manière suivante :
Pour le di-acide 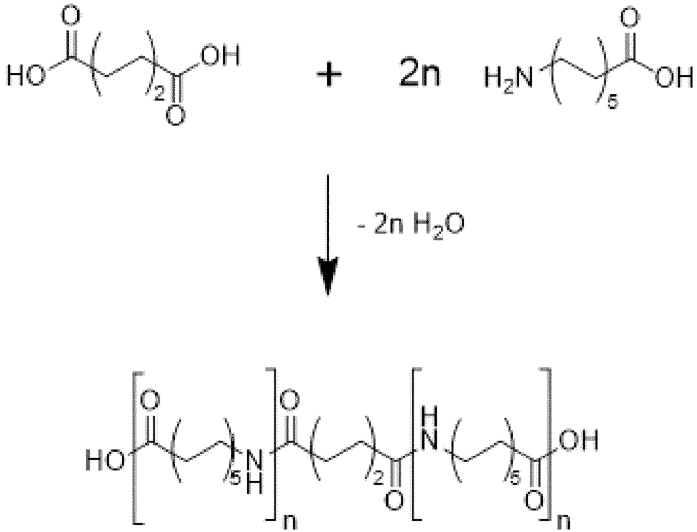
Pour le diamine

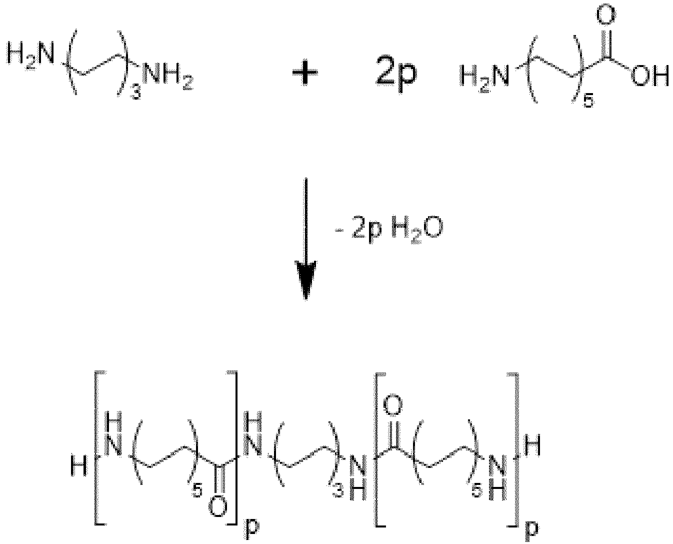

Les pré-polymères de la présente invention ont une masse molaire de départ telle que leur viscosité à l'état fondu dans une gamme de température comprise entre la température de fusion et la température de fusion augmentée de 40K est inférieure à 100 Pa.s, typiquement inférieure à 50 Pa.s et préférentiellement inférieure à 10 Pa.s.

Selon l'invention, la température du matériau composite intermédiaire à la sortie de l'unité d'imprégnation est égale ou supérieure à la température de fusion de la matrice, généralement comprise dans une plage de 40K à partir et au-dessus de sa température de fusion. Ainsi, on active, sous l'effet thermique, la vitesse de la polymérisation.

A l'inverse, selon une variante de l'invention, il est possible de maintenir la température du matériau composite intermédiaire à la sortie de l'unité d'imprégnation égale ou inférieure à la température de fusion de la matrice, de préférence dans une plage de 15K à partir et au-dessous de sa température de fusion. De cette manière, on ralentit le processus de polymérisation, notamment pour la fabrication de pré-imprégnés, destinés généralement à être réutilisés par compression à chaud et à subir de ce fait une post cuisson.

Une autre caractéristique de l'invention réside dans l'unité de polymérisation qui est constituée et /ou complétée par un tunnel de passage chauffé dont la section est plus grande que la section finale du profilé, de préférence sous circulation de gaz inerte, dont la géométrie n'est pas calibrante pour le profilé final de manière à favoriser l'évaporation des sous-produits de polymérisation. On entend par non calibrante le fait que l'unité de polymérisation ne représente pas précisément la forme du profilé finale, contrairement au cas d'une technique de pultrusion thermodurcissable traditionnelle, mais a une section plus large que celle du profilé. Sa section de passage est donc supérieure à celle du matériau composite qui y transite. Bien sûr selon l'invention, ladite unité de polymérisation pourra être munie de guides ou de conformateurs qui pourront maintenir dans une forme approchante le matériau composite en fusion pour en faciliter le calibrage ultérieur dans l'unité de calibrage qui donnera la forme finale au profilé. Cette approche permet donc d'avoir une unité de polymérisation relativement générique générant de surcroit très peu de contact avec le matériau de manière à limiter les efforts de frottements. Cette caractéristique de l'unité de polymérisation est rendue viable grâce à l'usage de pré-polymères, éléments peu volatiles.

L'utilisation d'une technologie de pultrusion thermoplastique par voie réactive permet d'imprégner parfaitement un taux de fibres très élevé (typiquement supérieur à 55% en volume) avec une très faible quantité de résine. Pendant l'étape de calibrage lorsque le matériau composite en fusion est compacté lors du passage dans la filière de calibrage, il n'y a pas ou peu de reflux de matière, ce qui généralement pénalise ce type d'approche en provoquant des coulures qui risquent de figer et de bloquer le passage. De plus, chaque fibre étant unitairement parfaitement imprégnée, il n'y a pas besoin de rechercher des pressions de consolidation importantes comme c'est le cas avec des profilés initialement mal imprégnés puisqu'il n'y a pas besoin de faire circuler de la matière entre les fibres. Les risques de casse des fibres conséquemment à la pression appliquée en entrée de calibrage sont réduits. Selon l'invention, le tunnel pourra avoir une longueur de 0,1 à plusieurs dizaine de mètres. La longueur de dudit tunnel sera choisie en fonction de la technique de chauffe de sorte à obtenir le degré de polymérisation souhaitée pour une application donnée. Pour accélérer encore la cinétique de polymérisation, le dit tunnel pourra être mis sous vide de manière à forcer l'extraction du sous-produit de polymérisation. Il pourra également utiliser avantageusement l'énergie des rayonnements infrarouge et/ou micro-ondes qui permettent d'avoir un échauffement rapide et homogène de la matière.

Dans un autre mode de réalisation privilégié de l'invention, on constitue le matériau composite intermédiaire dans l'unité de polymérisation en une pluralité d'inserts intermédiaires qui formeront le profilé final par regroupement dans l'unité de calibrage.Cette configuration permet d'optimiser l'évaporation du sous-produit dans l'unité de polymérisation grâce à des surfaces d'échange augmentées, avec en conséquence positive directe, l'augmentation de la cinétique de polymérisation et des cadences de production.

Selon un perfectionnement, l'unité d'imprégnation permet d'imprégner individuellement chaque insert intermédiaire. Cette configuration permet de faciliter l'imprégnation des inserts intermédiaires (chacune des zones étant par nature plus facile à imprégner que l'ensemble réuni).

Selon ce mode de réalisation, lesdits inserts intermédiaires pourront se présenter sous forme de nappes d'une épaisseur de l'ordre de 0,1 à 3 mm, typiquement de 0,5 à 2 mm, et préférentiellement inférieure à 1,5 mm. Le choix de la nappe est un choix économique qui simplifie l'usinage de l'unité d'imprégnation. En revanche, la disposition côte à côte limite un peu les possibilités de réorganisation des inserts dans le profilé final ; les inserts ne devant pas trop se toucher ou se croiser lorsqu'ils seront mis en position avant de rentrer dans le calibreur.

Dans le cas de production de profilés de formes complexes, on préférera opter, toujours selon l'invention, pour des inserts intermédiaires se présentant sous forme de petits profilés ronds distincts dont les diamètres peuvent être de l'ordre de 0,1 à 5 mm, typiquement de 0,5 à 3 mm, et préférentiellement inférieur à 2 mm. Cette approche offre en effet plus de flexibilité de positionnement de manière à être plus libre dans les formes à réaliser pour le profilé final. La forme des inserts est choisie de façon à permettre un usinage simple et économique de l'unité d'imprégnation. Un insert contient de une à quelques dizaines de mèches, connus aussi sous le nom anglais de « rovings », selon les grammages utilisés. L'unité d'imprégnation pourra contenir plusieurs dizaines voire centaines de ces inserts en fonction du type de profilés à produire. La somme de la section de l'ensemble des inserts représentant plus ou moins la section maximum envisageable pour le profilé final. Dans le cas de petits inserts, les fibres sont généralement orientées uniquement dans le sens de la pultrusion. Dans le cas des inserts formant une géométrie de type nappe, les renforts en fibres peuvent être multi-axiaux.

Les composites obtenus par la présente invention présentent un taux de fibres supérieur à 45 % en volume, typiquement compris entre 50 et 70% et préférentiellement de 55 à 65 %.

Les fibres du matériau composite sont choisies parmi un groupe comprenant des fibres minérales, des fibres de verre, des fibres de basalte, des fibres organiques, des fibres de carbone, des fibres d'aramide, se présentant soit sous forme de mèches unidirectionnelles soit sous forme de renforts multiaxiaux, des fibres métalliques, et des mélanges des fibres précitées.

L'invention a aussi pour objet un dispositif de pultrusion réactive thermoplastique pour obtenir une pièce profilée en matériau composite thermoplastique, comportant :
▷ une unité d'imprégnation (1) pour imprégner de résine des fibres de renforts traversant l'unité d'imprégnation selon une direction de tirage;
▷ une unité de polymérisation en aval de l'unité d'imprégnation pour procéder à une polymérisation de la résine de manière à obtenir une matrice enrobant les fibres partiellement ou totalement polymérisée, et à former avec les fibres un matériau composite intermédiaire (9) ;
▷ une unité de calibrage (5) en aval de l'unité de polymérisation pour calibrer par refroidissement le matériau composite intermédiaire (9) en fusion selon la forme finale spécifique du profilé (10) souhaité;
le dispositif étant caractérisé en ce qu'il comporte en outre une unité d'injection de pré-polymères comprenant : des moyens de mise en fusion et dosage séparés des pré-polymères réactifs, un moyen de mélange des pré-polymères réactifs pour former la résine, un moyen d'injection de ladite résine dans l'unité d'imprégnation, l'unité de polymérisation étant configurée pour laisser un espace autour des fibres imprégnées.

Dans un mode de réalisation, il est fait usage de deux extrudeusespour fournir sous forme fondue un premier et un deuxième prépolymère. Cette technique permet de fondre et de transporter les composants jusqu'au point de dosage avec des temps de séjour court. On entend par temps de séjour court, une durée de fusion inférieure à 10 min, typiquement de 1 à 5 min et préférentiellement inférieure à 3 min. Le fait de pouvoir maintenir un temps de fusion court limite l'auto réaction de la matière, cette dernière engendrant un bullage et une augmentation de la viscosité. Ce point est important pour la maitrise du dosage des deux composants et la montée en masse molaire finale du polymère dans le composite.

De manière préférentielle, les moyens de dosage comportent une pompe doseuse à engrenage raccordée en aval de l'extrudeuse. Il est possible d'utiliser en sortie d'extrudeuse des pompes volumétriques à engrenage, fonctionnant individuellement ou asservie l'une à l'autre, de manière à respecter un rapport de dosage, et à obtenir une plus grande précision de dosage que celle obtenue par la régulation des vitesses de rotation des extrudeuses.

Préférentiellement, les extrudeuses sont du type monovis. Les essais ont montré que ce type d'extrudeuse convenait à l'application.

Alternativement, on pourra utiliser des extrudeuses bi-vis qui présentent l'avantage de permettre un dégazage des produits pendant la fusion. Leur prix reste cependant un facteur limitant. Dans la suite du procédé, les deux pré-polymères réactifs sous forme liquide transitent au travers d'un mélangeur, par exemple un mélangeur statique, où ils sont mélangés de façon homogène au plus proche de l'unité d'imprégnation puis injectés dans cette dernière.

A la sortie de l'unité de polymérisation, selon l'invention, les fibres imprégnées du polymère en fusion passent dans un calibreur statique de type filière refroidie dont la section représente la forme finale, au retrait près, du profilé et dont les températures permettent, à son contact, de refroidir la matrice polymère du composite en dessous de son point de fusion.

Lorsqu'il s'agira de produire des profilés plats ou des profilés ouverts de forme simple type oméga, le calibreur de type filière pourra avantageusement être remplacé par un calibreur dynamique de type rouleaux à laminer, presse suiveuse ou bien encore chenille à bande refroidis, dont la section formée par l'interstice séparant les éléments de calibrage mobiles, représente la forme finale, au retrait près, du profilé et dont les températures permettent, à leur contact, de refroidir la matrice polymère du composite en dessous de son point de fusion.

Toujours selon l'invention, le matériau composite intermédiaire et/ou les inserts sont tirés en continu aux travers de ladite unité de calibrage par des moyens de tirage. Ces moyens de tirages sont connus en soit. Ils peuvent être de type Caterpillar largement utilisés dans les techniques de pultrusion ou d'extrusion.

Préférentiellement, les moyens de tirage du profilé issu de l'unité de calibrage servent simultanément au tirage du matériau composite et/ou des inserts au travers de ladite filière de pultrusion. En effet, il peut être envisagé de produire d'abord dans un premier temps les inserts composites puis de les introduire ultérieurement, après une étape de mise en fusion, dans l'unité de calibrage. Dans ce cas les moyens de tirage des inserts et du profilé final sont ou peuvent être différents. Dans le cas préféré de l'invention, le profilé final est produit en simultané avec le matériau composite intermédiaire et/ou les inserts de sorte qu'il n'y a qu'un seul moyen de tirage pour tirer le profilé et le matériau composite intermédiaire et/ou les inserts qui le composent.

L'invention a aussi pour objet un profilé composite, caractérisé en ce qu'il est fabriqué selon le procédé tel que décrit précédemment, et qu'il est utilisé pour former des pièces de véhicules routiers, des pièces d'avions, de trains ou de tout autre moyen de transport, des renforts de câbles électriques, des câbles d'haubanage, des câbles d'encrage de plateforme pétrolière, des plaques estampables à chaud, des profilés pour le bâtiment, des profilés de fenêtres, des ressorts à lames, des joncs de faibles diamètres destinés à être recoupés pour en faire des granulés fibres longues utilisables en injection et/ou extrusion plastique, des bandes fines dites « tape » destinées à être déposées et agglomérées à chaud pour former des pièces plus complexes ou bien encore tout autre profilé soumis à des sollicitations mécaniques.

### BRÈVE DESCRIPTION DES FIGURES

L'invention sera bien comprise, et d'autres caractéristiques et avantages de celle-ci apparaîtront, en référence aux dessins schématiques annexés, lesquels représentent, à titre d'exemple non limitatif, une forme de réalisation possible du dispositif concerné.

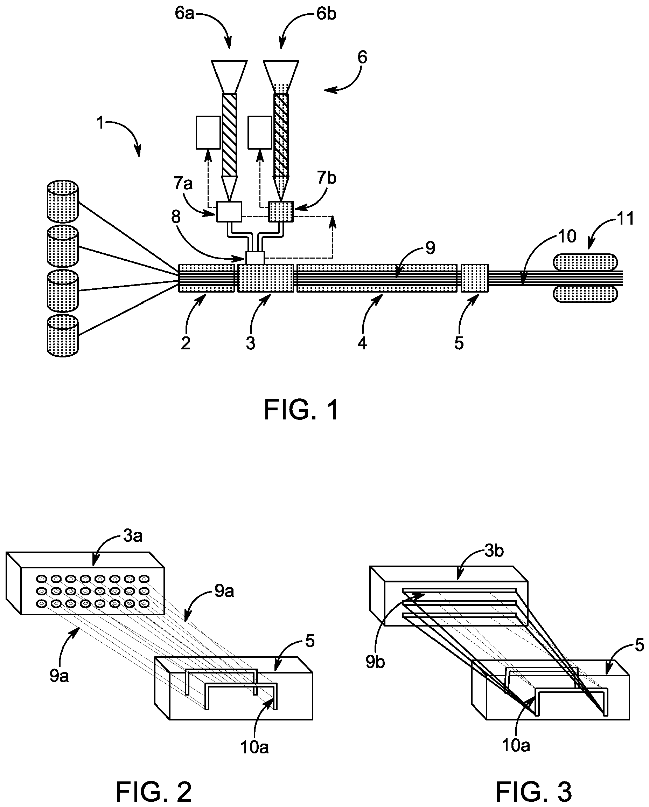

La figure 1 représente l'ensemble du dispositif 1 de l'invention dans une configuration particulière où les moyens d'injection sont composés de deux extrudeuses 6a et 6b reliées à deux pompes doseuses 7a et 7b.
La figure 2 illustre la fabrication d'un profilé de forme en U 10a constitué d'une pluralité d'inserts 9a de forme initiale ronde en sortie de l'unité d'imprégnation 3a de la filière générique et qui sont ensuite rassemblés et calibrés pour former un profilé en forme de U 10a dans l'unité de calibrage 5.
La figure 3 illustre la fabrication d'un profilé de forme en U 10a constitué d'une pluralité d'inserts 9b formant trois nappes en sortie de l'unité d'imprégnation 3b de la filière générique et qui sont ensuite rassemblés et calibrés pour former un profilé en forme de U 10a dans l'unité de calibrage 5.

### DESCRIPTION DÉTAILLÉE

La figure 1 représente un dispositif 1 comprenant successivement : une unité de préchauffage 2 des fibres qui permet d'amener des fibres de verre à une température proche de la température de fusion des pré-polymères réactifs soit environ 275°C dans le cas de pré-polymères polyamides réactifs semi-aromatiques. Les fibres sont chauffées par des rampes infrarouges sous flux d'azote. Une filière générique (3+4) est composée d'une unité d'imprégnation 3 et d'une unité de polymérisation 4. Dans l'exemple illustré en figure 1, l'unité d'imprégnation 3 dispose de trois zones chauffées avec une température de la zone de sortie d'environ 300°C. L'unité de polymérisation 4 est un tunnel chauffé sous azote à environ 300°C. Sa longueur est de 3 m de long de sorte que pour une vitesse de 1m/min, on dispose de 3 min de temps de polymérisation.

Le dispositif comporte en outre une unité d'injection 6 des pré-polymères réactifs. De façon avantageuse, comme illustré, les pré-polymères réactifs sont dosés séparément et mélangés juste à l'entrée de l'unité d'imprégnation 3, par exemple dans un mélangeur statique 8. Les équipements de mélange sont composés de deux extrudeuses 6a et 6b reliées à deux pompes doseuses 7a et 7b, dont l'une (la pompe esclave) est asservie à l'autre (la pompe maitre) de manière à respecter le rapport de dosage entre les fonctions acide du premier pré-polymère et les fonctions amine du deuxième pré-polymère.

Le dispositif comporte en outre une unité de calibrage spécifique 5 refroidie qui détermine la forme finale, au retrait près, du profilé composite 10 obtenu selon l'invention, et une unité de tirage 11 qui dans le cas illustré permet de faire avancer en simultané le matériau composite intermédiaire 9 et/ou les inserts 9 et le profilé final calibré 10 dans l'unité de calibrage 5.

Au niveau des pompes, le rapport de dosage est choisi pour obtenir un ratio proche de 1 entre le nombre de fonctions réactives *COOH* du premier pré-polymère et le nombre de fonctions réactives NH2 du second pré-polymère. Enfin, chaque extrudeuse est asservie à la pression mesurée en entrée de la pompe doseuse située en aval de manière à garantir à tout moment un bon remplissage des pompes. Le choix des extrudeuses et des vis est effectué de manière à obtenir des temps de séjour en fusion avant le passage dans la pompe inférieurs à 2 min. Typiquement pour produire une plaque de 100 x 2 mm à des vitesses de production comprises entre 0,5 et 1,0 m/min, on prendra deux extrudeuses de diamètre 20 ou 25 mm.

La figure 2 illustre le cas où le profilé final est préalablement subdivisé en une pluralité d'inserts. Les inserts illustrés sont au nombre de 24 (3x8). Chaque insert présente un diamètre de 3 mm c'est-à-dire une section d'environ 7 mm2. La forme du profilé U de l'unité de calibrage présente les dimensions géométriques suivantes : L = 30 mm ; H = 20 mm ; ep = 2,6 mm La section du profilé U est donc : 168,48 mm²; équivalente à la section représentée par la somme des sections des inserts.

Dans une autre configuration, les inserts illustrés en figure 3 sont regroupés en 3 nappes de largeur 65 mm et d'épaisseur respectives 0,86 mm soit une section globale de (0,86x65) x 3 = 167,7 mm² équivalente à la section du profilé U.

Sur les figures 2 et 3, le tunnel de polymérisation 4 n'est pas représenté pour plus de visibilité. De même, l'unité de calibrage 5 comporte des moyens de guidage en amont permettant à chaque insert d'être positionné correctement et de façon systématique en entrée de l'outil de calibrage. Ce système de guidage n'est pas représenté. Il précède l'unité de calibrage sur une distance de guidage supérieure à 20 mm, typiquement de 75 mm et préférentiellement supérieure à 100 mm. Il est à noter que, comme pour la majorité des polycondensats, les pré-polymères thermoplastiques utilisés dans l'invention sont séchés avant d'être fondus de manière à limiter la quantité d'eau à extraire.

L'invention a été décrite ci-dessus en référence à une forme de réalisation donnée à titre d'exemple. Il va de soi qu'elle n'est pas limitée à cette forme de réalisation mais qu'elle s'étend à toutes les formes de réalisation couvertes par les revendications ci-annexées.

## Revendications

1. Procédé de pultrusion réactive thermoplastique pour obtenir une pièce profilée en matériau composite thermoplastique, comprenant les étapes consistant à :
▷ passer des fibres de renfort à travers une unité d'imprégnation (3) selon une direction de tirage et imprégner les dites fibres avec une résine;
▷ procéder à une polymérisation de la résine dans une unité de polymérisation en aval de l'unité d'imprégnation de manière à obtenir une matrice enrobant les fibres, partiellement ou totalement polymérisée, et à former avec les fibres un matériau composite intermédiaire (9) ;
▷ calibrer par refroidissement dans une unité de calibrage (5) le matériau composite intermédiaire (9) en fusion selon une section finale spécifique du profilé (10) souhaité;
le procédé étant **caractérisé en ce que** :
▷ on forme la résine par un mélange de deux pré-polymères réactifs, un premier pré-polymère comportant au moins deux premières fonctions réactives terminales identiques X et un deuxième pré-polymère comportant au moins deux deuxièmes fonctions réactives terminales identiques Y; la première fonction réactive X étant capable de réagir avec la deuxième fonction réactive Y selon une réaction de condensation ;
▷ la polymérisation étant une montée en masse molaire desdits pré-polymères réactifs par une réaction de polycondensation dans l'unité de polymérisation (4).

2. Procédé selon la revendication 1, **caractérisé en ce que** les deux pré-polymères sont fondus et dosés séparément, puis mélangés entre eux pour former la résine.

3. Procédé selon l'une des revendications 1 à 2, **caractérisé en ce que** les fonctions réactives sont introduites en quantité quasi stoechiométrique dans la composition précurseur.

4. Procédé selon l'une des revendications 1 à 3, **caractérisé en ce que** la première fonction réactive est choisie dans un groupe comprenant OH et *NH₂,* et la deuxième une fonction réactive est choisie dans le groupe comprenant *COOH* et *COCl.*

5. Procédé selon l'une des revendications 1 à 4, **caractérisé en ce que** la structure des pré-polymères est choisie dans un groupe comprenant des structures aliphatiques, semi-cyclo aliphatiques et semi-aromatiques, les pré-polymères étant des thermoplastiques choisis dans un groupe comprenant les polyamides, les polyesters et leurs copolymères.

6. Procédé selon la revendication 5, **caractérisé en ce que** les monomères des pré-polymères sont choisis dans un groupe comprenant les polyamines, les polyols, les polyacides, les anhydrides, les polychlorures d'acide, les hydroxyacides et les aminoacides, et préférentiellement dans un groupe comprenant les diamines, les diols, les diacides et les dichlorures d'acide.

7. Procédé selon l'une des revendications 1 à 6, **caractérisé en ce que** lesdits pré-polymères présentent une masse molaire de départ telle que leur viscosité à l'état fondu dans une gamme de température comprise entre la température de fusion et la température de fusion augmentée de 40K est inférieure à 100 Pa.s, typiquement inférieure à 50 Pa.s et préférentiellement inférieure à 10 Pa.s.

8. Procédé selon l'une des revendications 1 à 7, **caractérisé en ce que** la température du matériau composite intermédiaire (9) à la sortie de l'unité d'imprégnation (3) est égale ou inférieure à la température de fusion de la matrice, de préférence comprise dans une plage de 15K à partir et au-dessous de sa température de fusion.

9. Procédé selon l'une des revendications 1 à 7, **caractérisé en ce que** ladite unité de polymérisation (4) est un tunnel de passage chauffé dont la section est plus grande que la section final du profilé (10) et **en ce qu'**on fait circuler un gaz inerte, par exemple de l'azote dans le tunnel.

10. Procédé selon la revendication 9, selon lequel on émet un rayonnement de type infrarouge et/ou micro onde sur le matériau composite dans le tunnel de passage pour chauffer le matériau composite intermédiaire.

11. Procédé selon l'une des revendications 1 à 10, selon lequel on subdivise le matériau composite intermédiaire dans l'unité de polymérisation en une pluralité d'inserts intermédiaires (9) qui formeront le profilé final (10) par regroupement dans l'unité de calibrage (5).

12. Procédé selon la revendication 11, selon lequel dans ladite unité d'imprégnation (3), on imprégne individuellement chaque insert intermédiaire.

13. Procédé selon l'une des revendications 11 ou 12, selon lequel lesdits inserts intermédiaires (9) se présentent sous forme de nappes (9b), lesdites nappes (9b) présentent une épaisseur de l'ordre de 0,1 à 3 mm, typiquement de 0,5 à 2 mm, et préférentiellement inférieure à 1,5 mm.

14. Procédé selon l'une des revendications 11 ou 12, selon lequel lesdits inserts intermédiaires (9) se présentent sous forme de petits profilés (9a) ronds présentant des diamètres de l'ordre de 0,1 à 5 mm, typiquement de 0,5 à 3 mm, et préférentiellement inférieures à 2 mm.

15. Procédé selon l'une des revendications 1 à 14, selon lequel le taux de fibres du matériau composite final est supérieur à 45 % en volume, typiquement compris entre 50 et 70% et préférentiellement de l'ordre de 55 à 65%.

16. Procédé selon l'une des revendications 1 à 15, selon lequel le temps de séjour en fusion des pré-polymères réactifs avant l'imprégnation des fibres est inférieur à 10 min, typiquement de 1 à 5 min et préférentiellement moins de 3 min.

17. Profilé composite, **caractérisé en ce qu'**il est fabriqué selon le procédé de l'une des revendications 1 à 16 et qu'il est utilisé pour former des pièces de véhicules routiers, des pièces d'avions, de trains ou de tout autre moyen de transport, des renforts de câbles électriques, des câbles d'haubanage, des câbles d'encrage de plateforme pétrolière, des plaques estampables à chaud, des profilés pour le bâtiment, des profilés de fenêtres, des ressorts à lames, des joncs de faibles diamètres destinés à être recoupés pour en faire des granulés fibres longues utilisables en injection et/ou extrusion plastique, des bandes fines dites « tape » destinées à être déposées et agglomérées à chaud pour former des pièces plus complexes ou bien encore tout autre profilé soumis à des sollicitations mécaniques.
